# EUROPEAN PATENT SPECIFICATION

(11) **EP 2 011 568 B1**
(45) Date of publication and mention of the grant of the patent: **24.08.2016**
(21) Application number: 07730496.2
(22) Date of filing: 15.03.2007
(51) Int. Cl.: B01J 19/12, H05B 6/80, B01D 11/02, G01N 1/44

(54) **DEVICE FOR EXTRACTION OF ORGANIC CHEMICAL COMPOUNDS WITH TOXIC PROPERTIES THAT ARE PRESENT IN ATMOSPHERIC SAMPLES, USING FOCUSED-MICROWAVE-HEATED SOLVENTS IN OPEN (NON-PRESSURIZED) SYSTEMS**
VORRICHTUNG ZUR EXTRAKTION VON ORGANISCHEN CHEMISCHEN VERBINDUNGEN MIT TOXISCHEN EIGENSCHAFTEN, DIE IN ATMOSPHÄRENPROBEN VORLIEGEN, UNTER VERWENDUNG VON DURCH FOKUSSIERTE MIKROWELLEN ERHITZTEN LÖSUNGSMITTELN IN OFFENEN (NICHT DRUCKBEAUFSCHLAGTEN) SYSTEMEN
DISPOSITIF D'EXTRACTION DE COMPOSÉS CHIMIQUES ORGANIQUES À PROPRIÉTÉS TOXIQUES PRÉSENTS DANS DES ÉCHANTILLONS ATMOSPHÉRIQUES, AU MOYEN DE SOLVANTS CHAUFFÉS PAR DES MICRO-ONDES FOCALISÉES DANS DES SYSTÈMES OUVERTS (N'AYANT PAS ÉTÉ MIS SOUS PRESSION)

(30) Priority: 16.03.2006 CL 200600589
(43) Date of publication of application: 07.01.2009
(73) Proprietor: UNIVERSIDAD TECNICA FEDERICO SANTA MARIA (USM), Valparaíso IV Region (CL)
(72) Inventor: CERECEDA BALIC, Francisco, V Región (CL); CARRASCO ESPINOSA, Héctor, Viña del Mar (CL); OLIVARES SALINAS, Manuel, Viña del Mar (CL); CERECEDA BALIC, Gabriel, Quilpué (CL)
(74) Representative: ZBM Patents - Zea, Barlocci & Markvardsen
(86) International application number: PCT/ES2007/070056
(87) International publication number: WO 2007/104823

(56) References cited:
- EP-A1- 1 439 218
- EP-A1- 1 618 798
- EP-A2- 0 249 500
- WO-A1-94/26853
- WO-A1-99/54033
- AU-B2- 677 876
- US-A- 3 309 634
- US-A- 4 681 740
- US-A- 5 059 400
- US-A- 6 061 826
- US-A- 6 061 926
- US-A- 6 114 680
- US-A1- 2002 102 738
- US-A1- 2003 109 053

## Description

### FIELD OF THE INVENTION

The invention describes a device for extraction of organic chemical compounds with toxic properties such as Polycyclic Aromatic Hydrocarbons (PAHs) and Polychlorinated Biphenyls (PCBs), contaminants present in particulate material of atmospheric samples, which is carried out using solvents that have been heated by means of focalized microwaves (MW), performed in open systems (not pressurized).

### BACKGROUND OF THE INVENTION

The employment of MW to extract organic compounds from particulate material (MP) resulting from air samples has been mainly used in applications of focalized MW in closed systems; however, the high pressures and temperatures reached in this type of equipments compel the development of very sophisticated, high safety and expensive equipments. One possibility to simplify and reduce costs is to use MW in open systems. The major problems in this type of applications are to achieve a good absorption of electromagnetic energy by the organic solvents, the regulation of the electromagnetic power produced by the magnetron that generates the MW, and to limit MW radiation which can be injurious to the health of whom operate these equipments.

Organic solvents are required for the extraction. Most of the appropriate solvents for this purpose (e.g. hexane, toluene and others) have apolar characteristics which makes them impossible to heat using MW.

In the market there are two types of equipments for chemical extraction with MW, both of high cost, one pressurized and the other one open. In the open variety, the device is designed for its employment in the generation of specific chemical reactions (e. g. synthesis), where the high energies obtained by the MW are used. In this way, these devices have a very limited capacity for manipulation of equipment and glass material of traditional and standard use in laboratory, because the MW radiation blockage excessively restricts the transition zone from the focalized MW zone to the exterior. This problem obliges the use of glass material specially design for this purpose or the restriction of typical chemical procedures, such as reflux.

The trouble with the open variety of MW equipments is the possibility of producing excessive MW radiation, which can be controlled by limiting the size and shape of the orifices present in the metallic structures that guides and focalizes the MW in direction to the container that holds the sample to be heated and extracted, and in the zone of transition from the focalized MW to the exterior.

The patent US 6.061.926 ("Controlled energy density microwave-assisted processes", from May 16^{th} 2000, by: Pare J R Jocelyn, Belanger Jacqueline M R and Punt Monique M.) describes the same principle of heating by absorption of MW, but restricted to small volumes of chemical solvents and transition zones, due to the need of limiting the MW radiation. This equipment is designed and thought to carry out specific chemical reactions, such as synthesis of chemical compounds.

Then, it is required a focalized microwave equipment (MWF) of an open variety, that could address those problems of restriction of heating by MW, rapidity, efficiency, volume, safety and use of standard chemical laboratory material.

### SUMMARY OF THE INVENTION

According to one aspect, that present invention provides a device as claimed in claim 1, and according to another aspect it provides a method as claimed in claim 6.

The objective of the invention is to develop a device for rapid, efficient and secure chemical extraction, using solvents heated by the application of focalized microwaves in open systems (not pressurized). This extraction device is designed to be used in the extraction of organic chemical compounds with toxic properties, such as PAHs and PCBs, which are contaminants present in atmospheric samples.

The invention is designed to heat polar solvents like water, in such a way that when apolar solvents (e.g. hexane, toluene and others) are used like those typically utilized in the extraction of samples containing organic contaminants, it is necessary to add a portion of a polar solvent to the sample (e.g. acetone, isopropyl alcohol and others) with the purpose to achieve absorption of the MW and as a consequence rapid and efficient heating of the apolar solvent (toluene) until ebullition. The choice and proportion of polar solvent have been determined in such a way that when exposed to an oscillating electromagnetic field they absorb as much energy as possible as a result of molecular friction due to their rotation phenomena.

As one of the relevant aspects of this invention, it is also incorporated a novel filter designed to block the MW to the exterior, which allows an important increase of the transition zone from where the focalized MW (interior of the equipment) are generated to the place where the glass material typically used in the laboratory (exterior of the equipment) is connected, improving the extraction capacity, allowing the utilization and connection of equipments and glass material of traditional and standard use in the laboratory, and at the same time allowing the extraction using a larger volume of solvent by taking advantage of the efficiency and rapidity of the heating using MWF. This filter for blocking MW radiation constitutes a characteristic that has not been found in the state of the art.

The working principle of the equipment is based on heating of substances, solvents in this case, due to the friction produced in the polar molecules, that is to say it is a mechanical effect induced by the oscillation of the electromagnetic field generated and canalized to the interior of the MW subsystem. The MW energy is generated by a magnetron, and it is then canalized by a waveguide to the glass container that holds the solvent; the waveguide and its termination are designed to achieve an optimal MW absorption, producing minimal reflection towards the magnetron. The filter for blocking the MW to the exterior allows that the energy delivered by the magnetron does not escape to the exterior and, as a whole with the waveguide, is efficiently absorbed by the heated solvent. The power regulation is also an important aspect because it is required to maintain a condition of constant and moderate ebullition, once this condition is achieved; this is accomplished by means of an electronic control specifically designed, which can be programmed such that 100% of power is initially applied to rapidly reach the ebullition state, and then a percentage of about 60% of duty cycle is applied, and preferably at an approximate cadency of 1 Hz, to maintain the process conveniently regulated.

The equipment works at the frequency band of free use of 2450 MHz, using a magnetron of the type commonly found in domestic MW ovens of low cost, disposed in a waveguide especially designed, in such a way that the container that holds the extraction solvent absorbs the maximum MW energy, the power being controlled by means of the electronic control.

The developed equipment uses a magnetron of the type widely used in domestic MW ovens, which together with the electronic and MW focalization circuits specifically designed for this application result in a product of moderate and very competitive cost compared to other market alternatives.

In summary, the objectives of the invention are to provide an equipment for rapid and efficient chemical extraction, using solvents heated by the regular application of electronically focalized MW performed in non-pressurized open systems, with a magnetron of the type widely used in domestic MW ovens of low cost, and incorporating a filter for blocking MW to the exterior which allows using standard laboratory elements of much higher capacity than similar equipments.

### BRIEF DESCRIPTION OF THE DRAWINGS

Figure 1 shows a general, complete and functional scheme of the proposed invention.
Figure 2 shows a perspective view of the exterior of the whole equipment.
Figure 3 shows a cut through a perspective view of the interior of the equipment.
Figure 4 shows a complete perspective view of the equipment and the interior components.

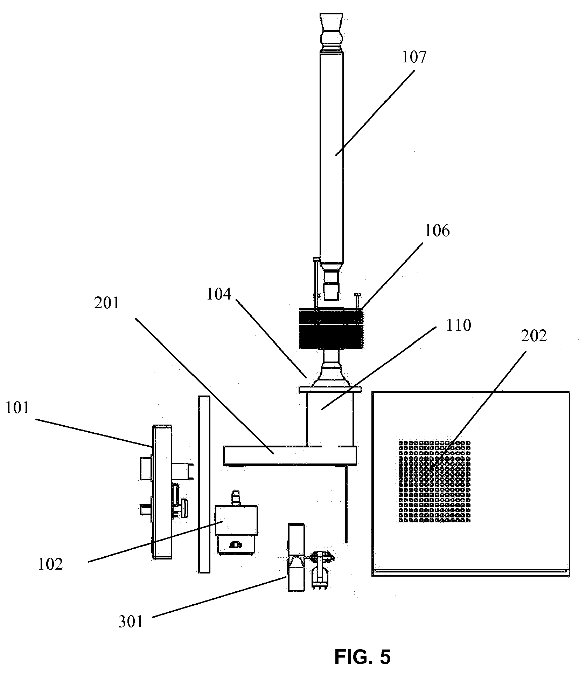

Figure 5 shows a lateral view of a detailed breakdown of all the component parts of the equipment.
Figure 6 shows a cross section of the MW blocking filter of the present invention.
Figure 7 shows a graph of the efficiency of the MW blocking filter of the present invention.

### DESCRIPTION OF THE PREFERRED EMBODIMENTS

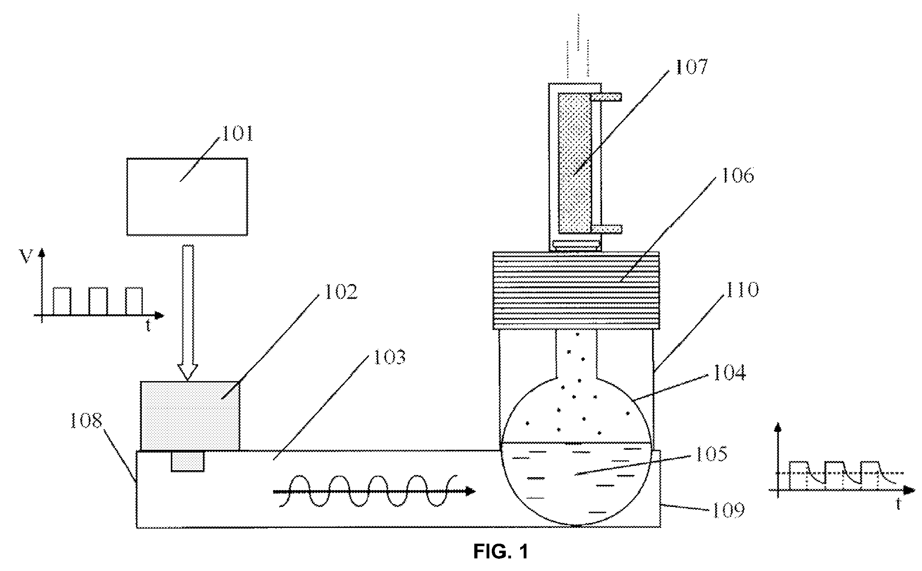

The developed equipment works at the frequency band of free use of 2450 MHz, using a magnetron of the type widely used in domestic MW ovens of low cost, disposed in a waveguide especially designed for this application, in such a way that the container that holds the extraction solvent absorbs the maximum MW energy, the power being programmed and controlled by a specifically designed electronic circuit. The scheme of figure 1 shows the embodiment of the invention in a simplified and functional form. The magnetron (102) generates the MW signal whose power is regulated by the electronic circuit (101), the MW is guided by the waveguide (103) to the standard glass container (104) for the solvent, which correspond to a round bottom distillation flask with 250 ml capacity that holds the solvent to be heated (105) (extraction solvent). The vapor produced by the ebullition of the solvent ascends through the neck of the flask to the condenser of the reflux means (107) and comes out from the interior of the MW equipment to the exterior through the filter for blocking the MW (106). The solvent in vapor phase is typically condensed in the reflux means (107) and goes back to the distillation flask (104) to initiate a new reflux cycle.

The control of power is achieved by varying the duty cycle in an on/off feeding mode of the magnetron (102), but at frequency (one cycle per second approximately) substantially higher than the one used in the application of domestic ovens, because it is required an acceptable stability of temperature of the substances to be heated, whose mass is considerably smaller in this application, compared to the typical mass in domestic ovens. The regulation of power is initially at 100% until rapidly achieving ebullition, and then a percentage of around 60% of duty cycle is applied to keep the process regulated.

The waveguide (103) is designed according to the standard specified in the literature for the working frequency, and so are its terminations (108 and 109), in order to achieve an optimal efficiency of power transmission from the magnetron (102) to the waveguide (103) and to the distillation flask (104).

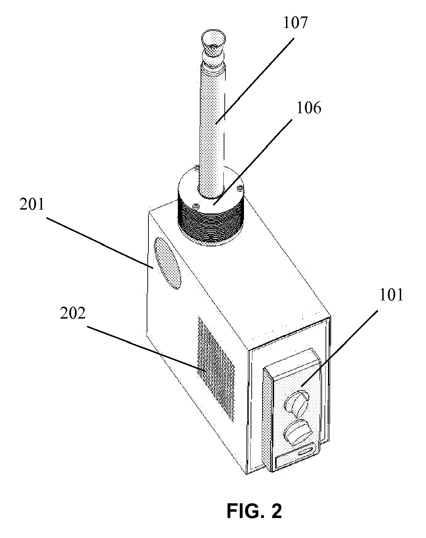

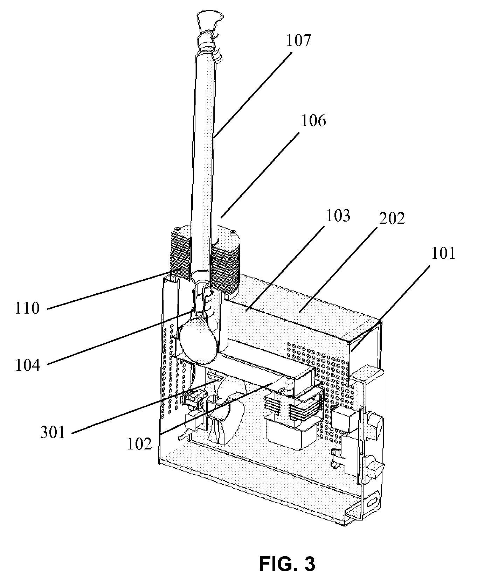

The distillation flask (104) (e.g. a typical standard 250 ml round bottom flask) is disposed in the waveguide (103) termination, in such a way that almost all the solvent to be heated (105) is located inside the waveguide (103), and it behaves as an absorbent load. The distillation flask (104) is introduced in the waveguide (103) through a conductor mesh cylinder (110) which acts as an electromagnetic shield, but at the same time it allows visualizing the process from the exterior of the equipment through another window shielded with a conductor mesh (202) that is illustrated in figures 2 and 3. The exterior diameter of the distillation flask (104) that holds the solvent is equal to the interior width of the waveguide (103) and to the interior diameter of the conductor mesh cylinder (110), in such a way that the solvent covers a maximum of the transversal section of the waveguide (103) to achieve maximum efficiency of heating, as can be appreciated in figure 1.

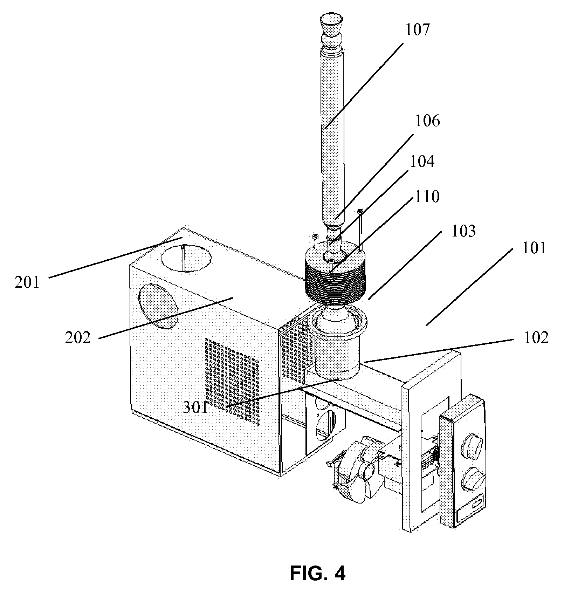

One of the key parts of the current invention is the safety device against MW radiation, a filter for blocking MW (106), which allows working with a standard distillation flask (104), a container with higher capacity than those used in the state of the art, and at the same time constitutes a lid through which the distillation flask (104) is introduced into the conductor mesh cylinder (110) and waveguide (103) and taken out to the exterior of the MW equipment to load and unload solvent (105) in each process of extraction, as can be better appreciated in figures 3 and 4.

The MW blocking filter (106) is composed by a plurality of conductor plaques (dishes) with cylindrical cavities through which passes the neck of the distillation flask (104). The circular conductor plaques are 0.5 mm thick, with an exterior radius of 47 mm and an internal radius of 12 mm, disposed parallel to each other and separated by 2 mm, and all connected through the exterior perimeter in short circuit, and open in the interior perimeter, that is, in the neck zone of the distillation flask (104).

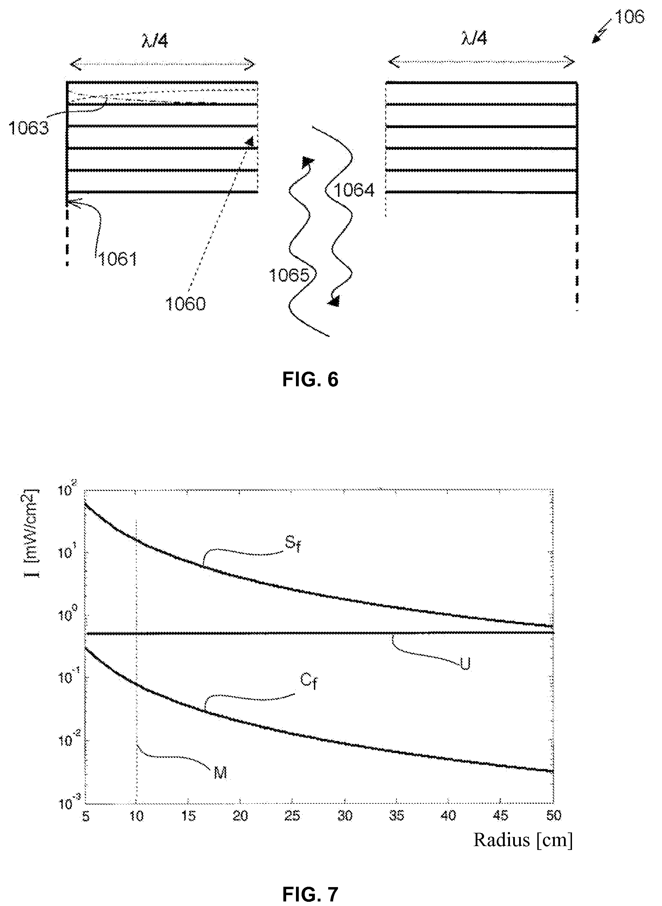

As shown in figure 6, between the open interior perimeter (1060) and the exterior perimeter closed in short circuit (1060) there is a distance of a quarter wavelength (λ/4 = 30 mm) at the emission frequency of the magnetron (102), in such a way that the cavities ending in short circuit in the exterior, transform into open circuits for the electromagnetic wave in the interior perimeter, where the neck of the distillation flask (104) passes, and as a consequence the electromagnetic wave is rapidly attenuated before reaching the exterior. In figures 2, 3 and 4 can be appreciated the conductor plaques that form the cavities of the blocking filter for MW (106).

The section of radius of a quarter wavelength (λ) allows transforming the exterior electric short circuit (1061) into an equivalent interior open circuit (1060), such that the incident wave (1065) from the interior of the filter encounters a cylindrical waveguide having walls that cut the current flow induced by the electromagnetic wave (1063), thus blocking the passage of said wave. Due to this effect the incident wave (1065) encounters high impedance and therefore is reflected (1064) towards the interior for at least 99%, according to measurements.

It is worth mentioning that excessive radiation of MW that constitute a risk for the operator health are those greater than approximately 0.5 mW/cm², according to the Chilean legislation. The invention, incorporating the blocking filter for MW (106) which has been designed to practically annul the MW to the exterior, allows an experimental attenuation of about 20 dB with respect to the case in which the filter is not employed. Considering the maximum power of MW available and needed in the magnetron (102) (approximately 800 W), this important reduction of MW radiation allows the equipment to work well below the threshold previously mentioned, while this condition is not met when the MW blocking filter (106) is not used. Without the filter, under the previous conditions, the radiation to the exterior is about ten times the minimum considered acceptable.

As appreciated in figure 7, the graph shows results of absolute radiation measurements (MW radiation), with filter (C_{f}) and without filter (S_{f}). In the case without filter (S_{f}) a conductor tube with the same dimensions is employed. The measurements (M) are made at a distance of 10 cm from the exterior mouth of the filter and without chemical material, i.e. with minimum MW absorption in the interior. The measurement can be extrapolated in distance, since the radiation decreases with the square of the distance. The graph includes the radiation threshold (U) accepted by the Chilean legislation as non-damaging threshold with continuous exposure for the human body.

Regarding the velocity of solvent heating until reaching an ebullition condition, there average times close to one minute have been obtained in multiple essays, which are much shorter than those that can be achieved with equipment for conventional heating by convection, those times being close to 25 minutes considering the same volume of solvent (e.g. toluene).

Figure 1 shows in a simplified manner how the temperature of the solvent to be heated is controlled. Pulsed feeding of the magnetron (a highly non-linear device) has a frequency and duty cycle percentage such that it can maintain the average temperature of the solvent adequately programmed and controlled as required by the chemical application process.

A fan (301) is used to counterbalance the inevitable heating of the magnetron (102), whose ventilation is accomplished through a metallic mesh window (202).

## Claims

1. Device for extracting organic compounds from material in particle form (MP) that comes from atmospheric samples, using solvents heated by the application of focalized microwaves (MW) in open, non-pressurized systems, which comprises: a magnetron (102);
- an electronic control circuit (101) of the magnetron;
- a distillation flask with a neck (104) which is suitable for containing the solvent (105) with the sample to be heated;
- a reflux means (107) which permits condensing the vapor produced by the distillation;
- a microwave blocking filter (106), which allows the exit of the vapor produced by the ebullition of the solvent (105) with the sample towards the reflux means (107);
and
- a waveguide (103), which has at one end the magnetron (102) and the electronic control circuit (101), and at the other end the distillation flask (104) to be heated, the microwave blocking filter (106) and the reflux means (107), **characterised in that** said blocking filter (106) is constituted by a plurality of conductor plates with cylindrical cavities, the neck of the distillation flask (104) passing through the centres of said cavities, said plates being disposed in parallel position and all ending connected in short circuit in the exterior perimeter (1061), and open in the interior perimeter (1060) of the neck zone of the distillation flask; wherein the device is adapted such that in use the distance between the open interior perimeter and the exterior perimeter closed in short circuit (1061), is a quarter wavelength (λ/4) of the emission frequency of the magnetron, such that the cavities ending in short circuit in the exterior perimeter transform into open circuits for the electromagnetic wave in the interior perimeter, where the neck of the distillation flask (104) passes, and as a consequence the passage of electromagnetic waves is blocked.

2. Device for extracting organic compounds according to claim 1, wherein the circular conductor plates have approximately 0.5 mm of thickness, with an exterior radius of approximately 47 mm and an internal radius of approximately 17 mm.

3. Device for extracting organic compounds according to claim 2, wherein the conductor plates disposed in parallel position are separated approximately 2 mm from each other.

4. Device for extracting organic compounds according to claim 1, wherein the power control is achieved varying the duty cycle in on/off mode of the power source of the magnetron (102), with a frequency of approximately one cycle per second, wherein the regulation of the power is initially at 100% until reaching ebullition rapidly, and thereafter a percentage of approximately 60% of the duty cycle is applied, for maintaining the process regulated.

5. Device for extracting organic compounds according to claim 1, wherein the blocking filter (106) acts as a lid of a conductor mesh cylinder (110) which acts as an electromagnetic shield of the distillation flask (104) for the heating, but at the same time it allows visualizing the process from the exterior of the equipment through another window shielded with a conductor mesh (202), the exterior diameter of the distillation flask (104) being equal to the interior width of the waveguide (103), and to the interior diameter of the conductor mesh cylinder (110), in such a way that the solvent (105) covers a maximum of the transversal section of the waveguide (103) to achieve maximum efficiency of heating.

6. Method for extracting organic compounds from material in particle form (MP) that comes from atmospheric samples, using solvents heated by the application of focalized microwaves (MW) in open systems, which comprises the steps of:
a) providing a device as claimed in claim 1;
b) controlling the magnetron power by varying the duty cycle in on/off mode of the power source of the magnetron (102), with a frequency of approximately one cycle per second;
c) initializing the regulation of the power at 100% until reaching ebullition of the mixture rapidly;
d) applying a percentage of approximately 60% of the duty cycle in on/off mode of the power source of the magnetron (102), for maintaining the process regulated;
e) extracting, in ebullition, the compounds of interest present in the sample for obtaining an extract;
f) allowing the vapor to reach the reflux means (107) which allows condensing the vapor produced by the distillation;
g) allowing the evaporated solvent to exit the inside of the MW equipment to the exterior through the MW blocking filter (106) and return to the distillation flask (014) by condensation to initiate a new reflux cycle.

## Patentansprüche

1. Vorrichtung zur Extraktion von organischen Verbindungen aus Material in Partikelform (MP), welches aus Atmosphärenproben stammt unter Verwendung von durch den Einsatz von fokussierten Mikrowellen (MW) in offenen, nicht druckbeaufschlagten Systemen erhitzten Lösungsmitteln, welches folgendes umfasst: einen Magnetron (102);
- einen elektronischen Regelkreis (101) des Magnetrons;
- einen Destillationskolben mit einem Hals (104), der geeignet ist, um das Lösungsmittel (105) mit der zu erhitzenden Probe zu enthalten;
- ein Rückflussmittel (107), welches das Kondensieren des durch die Destillation entstandenen Dampfes ermöglicht;
- einen Mikrowellensperrfilter (106), welcher den Ausfluss des durch das Sieden des Lösungsmittels (105) erzeugten Dampfes mit der Probe in Richtung zum Rückflussmittel (107) ermöglicht; und
- eine Wellenführung (103), welche an einem Ende das Magnetron (102) und den elektronischen Regelkreis (101) hat, und an dem anderen Ende den zu erhitzenden Destillationskolben (104), den Mikrowellensperrfilter (106) und das Rückflussmittel (107) hat,
**dadurch gekennzeichnet, dass** der Sperrfilter (106) durch eine Vielzahl von Leiterplatten mit zylindrischen Aussparungen gebildet ist, wobei der Hals des Destillationskolbens (104) die Mittelpunkte der Aussparungen durchgeht, wobei die Platten parallel angeordnet sind und alle am Ende in Kurzschluss im äußeren Umfang (1061) angeschlossen sind, und offen im inneren Umfang (1060) des Halsbereichs des Destillationskolbens sind; wobei die Vorrichtung angepasst ist, so dass im Einsatz der Abstand zwischen dem offenen inneren Umfang und dem in Kurzschluss geschlossenen äußeren Umfang (1061) ein Viertel der Wellenlänge (λ/4) der Sendefrequenz des Magnetrons ist, so dass die Aussparungen, die in Kurzschluss im äußeren Umfang enden, zu offenen Kreisen für die elektromagnetische Welle im inneren Umfang werden, welchen der Hals des Destillationskolbens (104) durchgeht und dementsprechend der Durchgang von elektromagnetischen Wellen gesperrt ist.

2. Vorrichtung zur Extraktion von organischen Verbindungen nach Anspruch 1, wobei die kreisförmigen Leiterplatten ca. 0,5 mm Dicke, einen äußeren Radius von ca. 47 mm und einen inneren Radius von ca. 17 mm haben.

3. Vorrichtung zur Extraktion von organischen Verbindungen nach Anspruch 2, wobei die parallel angeordneten Leiterplatten voneinander ca. 2 mm entfernt sind.

4. Vorrichtung zur Extraktion von organischen Verbindungen nach Anspruch 1, wobei die Leistungssteuerung dadurch erzielt wird, dass die Einschaltdauer im ein/aus-Modus der Leistungsquelle des Magnetrons (102) mit einer Frequenz von ca. einem Zyklus pro Sekunde variiert wird, wobei die Leistungsregelung anfangs bei 100% liegt, bis das Sieden schnell erreicht wird, und danach ein Anteil der Einschaltdauer von ca. 60% angewandt wird, um die Steuerung des Verfahren zu erhalten.

5. Vorrichtung zur Extraktion von organischen Lösungsmitteln nach Anspruch 1, wobei der Sperrfilter (106) als ein Deckel eines leitenden Gewebezylinders (110) wirkt, welcher als elektromagnetische Abschirmung des Destillationskolbens (104) für die Erhitzung wirkt, aber gleichzeitig das Visualisieren des Verfahrens von außerhalb der Ausrüstung durch ein anderes mit einem leitenden Gewebe (202) abgeschirmtes Fenster ermöglicht, wobei der Außendurchmesser des Destillationskolbens (104) die innere Breite der Wellenführung (103) und den Innendurchmesser des leitenden Gewebezylinders (110) gleicht, so dass das Lösungsmittel (105) einen maximalen Querschnitt der Wellenführung (103) deckt, um eine höchstmögliche Effizienz der Erhitzung zu erzielen.

6. Verfahren zur Extraktion von organischen Verbindungen aus Material in Partikelform (MP), welches aus Atmosphärenproben stammt unter Verwendung von durch den Einsatz von fokussierten Mikrowellen (MW) in offenen Systemen erhitzten Lösungsmitteln, welches folgende Schritte umfasst:
a) das Bereitstellen von einer Vorrichtung wie in Anspruch 1 beansprucht;
b) die Regelung der Magnetronleistung durch die Variation der Einschaltdauer im ein/aus-Modus der Leistungsquelle des Magnetrons (102), mit einer Frequenz von ca. einem Zyklus pro Sekunde;
c) das Initialisieren der Regelung der Leistung bei 100%, bis das Sieden der Mischung schnell erreicht wird;
d) das Anwenden eines Anteils von ca. 60% der Einschaltdauer im ein/aus-Modus der Leistungsquelle des Magnetrons (102), um die Regelung des Verfahrens zu erhalten;
e) das Extrahieren, im Siedezustand, der Verbindungen von Interesse, die in der Probe anwesend sind, um einen Extrakt zu erhalten;
f) das Ermöglichen des Erreichens des Rückflussmittels (107) durch den Dampf, was das Kondensieren des durch die Destillation erzeugten Dampfes ermöglicht;
g) das Ermöglichen des Ausgangs des verdunsteten Lösungsmittels von innerhalb der MW-Ausrüstung nach Außen durch den MW-Sperrfilter (106) und den Rückgang in den Destillationskolben (014) mittels Kondensation, um einen neuen Rückflusszyklus zu beginnen.

## Revendications

1. Dispositif pour extraire des composés organiques de matériau en forme de particules (MP) qui procède d'échantillons atmosphériques, en utilisant des solvants échauffés par application de microondes (MW) focalisées en systèmes ouverts, non pressurisés, qui comprend : un magnétron (102) ;
- un circuit de contrôle électronique (101) du magnétron ;
- un ballon de distillation ayant un goulot (104) qui est approprié pour contenir le solvant (105) avec l'échantillon à échauffer ;
- un moyen de reflux (107) qui permet de condenser la vapeur produite par la distillation ;
- un filtre de blocage de microondes (106), qui permet la sortie de la vapeur produite par l'ébullition du solvant (105) avec l'échantillon vers le moyen de reflux (107) ; et
- un guide d'ondes (103), qui a à une extrémité le magnétron (102) et le circuit de contrôle électronique (101), et à l'autre extrémité le ballon de distillation (104) à être échauffé, le filtre de blocage de microondes (106) et le moyen de reflux (107),
**caractérisé en ce que** ledit filtre de blocage (106) est constitué par une pluralité de plaques conductrices avec des cavités cylindriques, passant le goulot du ballon de distillation (104) à travers des centres desdites cavités, étant disposées lesdites plaques en position parallèle et finissant toutes en connexion en court-circuit dans le périmètre extérieur (1061), et ouvertes dans le périmètre intérieur (1060) de la zone de goulot du ballon de distillation ; dans lequel le dispositif est adapté de façon que lors du fonctionnement la distance entre le périmètre intérieur ouvert et le périmètre extérieur fermé en court-circuit (1061) est un quatrième de la longueur d'onde (λ/4) de la fréquence d'émission du magnétron, de façon que les cavités finissant en court-circuit dans le périmètre extérieur deviennent des circuits ouverts pour l'onde électromagnétique dans le périmètre intérieur, par lequel le goulot du ballon de distillation (104) passe, et en conséquence le passage d'ondes électromagnétiques est bloqué.

2. Dispositif pour extraire des composés organiques selon la revendication 1, dans lequel les plaques conductrices circulaires ont environ 0,5 mm d'épaisseur, avec un rayon extérieur d'environ 47 mm et un rayon intérieur d'environ 17 mm.

3. Dispositif pour extraire des composés organiques selon la revendication 2, dans lequel les plaques conductrices disposées en position parallèle sont séparées environ 2 mm les unes par rapport aux autres.

4. Dispositif pour extraire des composés organiques selon la revendication 1, dans lequel le contrôle de la puissance est atteint en variant le facteur d'utilisation dans le mode on/off de la source de puissance du magnétron (102), avec une fréquence d'environ un cycle par seconde, dans lequel la régulation de la puissance est initialement au 100% jusqu'à ce que l'ébullition soit atteinte rapidement, et par la suite un pourcentage d'environ 60% du facteur d'utilisation est appliqué afin de maintenir le procédé contrôlé.

5. Dispositif pour extraire des composés organiques selon la revendication 1, dans lequel le filtre de blocage (106) agit comme un couvercle d'un cylindre de maille conductrice (110) qui agit comme un blindage électromagnétique du ballon de distillation (104) pour l'échauffement, mais en même temps permet la visualisation du procédé de l'extérieur de l'équipement à travers d'une autre fenêtre blindée avec une maille conductrice (202), étant le diamètre extérieur du ballon de distillation (104) égal à la largeur intérieure de la guide d'ondes (103), et au diamètre intérieur du cylindre de maille conductrice (110), de façon que le solvant (105) couvre un maximum de la section transversale de la guide d'ondes (103) afin d'atteindre l'efficacité maximale de l'échauffement.

6. Procédé pour extraire des composés organiques de matériau en forme de particules (MP) qui procède d'échantillons atmosphériques, en utilisant des solvants échauffés par application de microondes (MW) focalisées en systèmes ouverts, qui comprend les étapes de :
a) fournir un dispositif tel que revendiqué dans la revendication 1 ;
b) contrôler la puissance du magnétron en variant le facteur d'utilisation en mode on/off de la source de puissance du magnétron (102) ; avec une fréquence d'environ un cycle par seconde ;
c) initialiser la régulation de la puissance à 100% jusqu'à ce que l'ébullition du mélange soit rapidement atteinte ;
d) appliquer un pourcentage d'environ 60% du facteur d'utilisation dans le mode on/off de la source de puissance du magnétron (102), pour maintenir le procédé contrôlé ;
e) extraire, en ébullition, les composés d'intérêt présents dans l'échantillon afin d'obtenir un extrait ;
f) permettre que la vapeur atteigne le moyen de reflux (107), ce qui permet de condenser la vapeur produite par la distillation ;
f) permettre que le solvant évaporé sorte de l'intérieur de l'équipement de MW à l'extérieur à travers du filtre de blocage de MW (106) et qui retourne au ballon de distillation (014) par condensation afin d'initier un nouveau cycle de reflux.
